# EUROPEAN PATENT SPECIFICATION

(11) **EP 0 475 595 B1**
(45) Date of publication and mention of the grant of the patent: **22.10.1997**
(21) Application number: 91307497.7
(22) Date of filing: 14.08.1991
(51) Int. Cl.: G11B 25/04, G11B 33/12, G11B 17/04, G11B 11/10

(54) **Recording and/or reproducing apparatus for optical and magneto-optical discs**
Aufzeichnungs- und/oder Wiedergabegerät für optische und magneto-optische Platten
Appareil d'enregistrement/reproduction de disques optiques et magnéto-optiques

(30) Priority: 24.08.1990 JP 222828/90
(43) Date of publication of application: 18.03.1992
(73) Proprietor: SONY CORPORATION, Tokyo 141 (JP)
(72) Inventor: Fujisawa, Hirotoshi, Patents Division, Shinagawa-ku, Tokyo 141 (JP)
(74) Representative: Cotter, Ivan John

(56) References cited:
- EP-A- 0 336 423
- US-A- 3 729 201
- US-A- 4 712 146
- US-A- 4 837 758
- PATENT ABSTRACTS OF JAPAN vol. 13, no. 73 (P-830)20 February 1989 & JP-A-63 257 944
- MINI MICRO SYSTEMS. vol. 18, no. 10, July 1985, BOSTON US pages 133 - 141; CARL WARREN: 'Optical 3 1/2-inch drive adds erasability'
- ELECTRONICS. vol. 55, no. 26, December 1982, NEW YORK US pages 45 - 46; JOHN GOSCH: 'Magneto-optics packs 5-cm disk with 10 megabytes'
- EDN ELECTRICAL DESIGN NEWS. vol. 35, no. 11, 24 May 1990, NEWTON, MASSACHUSETTS US pages 95 - 97; J. D. MOSLEY: 'Mini disk drives strive for acceptance'

## Description

This invention relates to recording and/or reproducing apparatus for optical discs accommodated in disc cartridges.

Read-only optical discs are known as optical recording media for music signals, video signals or other information signals. There has also been proposed, as an optical recording medium enabling signal erasure and re-recording, a magneto-optical disc employing a magnetic thin film as a recording layer.

With an optical recording medium, such as the above-mentioned optical disc or magneto-optical disc, recording and/or reproduction of information signals at an extremely high density is possible because a laser beam is utilized for recording and/or reproducing the information signals. With an optical disc devoted to reading of prerecorded information signals, such as a so-called compact disc, recording of about 74 minutes of music signals is possible with a disc size of 12cm. Approximately the same amount of recording is possible with a magneto-optical disc.

To improve the recording density, there has been proposed a method of compressing information signals before recording. If such high density recording could be achieved, the same amount of information as now recorded on a standard disc could be recorded on an optical disc of a smaller size.

Patent Specification EP-A-336423 discloses a player for magneto optical disc cassettes having cartridge loading means, drive means for the loaded disc, a read/write head located below the loaded disc and a magnetic field coil above the loaded disc for movement in a direction parallel to the read/write head.

According to the invention there is provided an optical disc recording and/or reproducing apparatus employing a disc cartridge having accommodated therein an optical disc as a recording medium, the apparatus comprising:
an outer casing comprising therein:
a cartridge loading section for loading said disc cartridge;
a driving unit for rotationally driving the optical disc accommodated in said disc cartridge;
a disc loading unit for loading said disc cartridge onto said cartridge loading section and loading said optical disc accommodated in said disc cartridge onto said disc driving unit;
a battery storage section;
a head unit transportable across between inner and outer peripheries of said optical disc driven rotationally by said disc driving unit for recording information signals on or reproducing information signals from said optical disc, the head unit comprising an optical head provided on one side of the disc accommodated in the disc cartridge loaded on a main body of the apparatus; and
means for generating an external magnetic field, said means being mounted on the other side of the disc for facing the optical head with the disc in between and being arranged to be driven radially of the disc together with the optical head; and
means for setting the position of the external magnetic field generating means with respect to the disc in a state in which the disc cartridge is completely loaded in position on the main body; said setting means comprising transporting means for selectively transporting the external magnetic field generating means between a position approaching the disc in the disc cartridge and a position displaced away from the disc, the transporting means comprising supporting means for supporting the external magnetic field generating means between the position approaching the magneto-optical disc and the position displaced away from the disc, and connecting means connected to the optical head and to which the supporting means is mounted;
characterized in that:
the optical disc is not more than 80mm in diameter;
the outer casing has a length not more than 112mm, a width not more than 89mm, and a height not more than 31mm;
the supporting means is mounted rotatably to said connecting means; said head unit further comprises:
means for discriminating the disc cartridge type so that said transporting means selectively transports said external magnetic field generating means on the basis of the result of discrimination of the disc cartridge type effected by said discriminating means; and
the discriminating means comprises an engaging section arranged to be engaged in a discriminating section provided in the disc cartridge and operative to discriminate the disc cartridge type, the engaging section being provided directly on a pivoted controlling plate controlling pivoting of a magnetic head supporting arm and coupled to a rotation biasing plate by a spring, the rotation biasing plate being directly engaged by the disc cartridge and the engaging section being arranged to engage with the disciminating section for selective transport of the external magnetic field generating means between the position approaching the disc and the position displaced away from the disc by the transporting means.

The invention will now be described by way of example with reference to the accompanying drawings, throughout which like parts are referred to by like references, and in which:
Figure 1 is a perspective view from above of a disc cartridge accommodating a magneto-optical disc;
Figure 2 is a perspective view from below of the cartridge of Figure 1;
Figure 3 is a perspective view from above of a disc cartridge accommodating an optical disc;
Figure 4 is a perspective view from below of the cartridge of Figure 3;

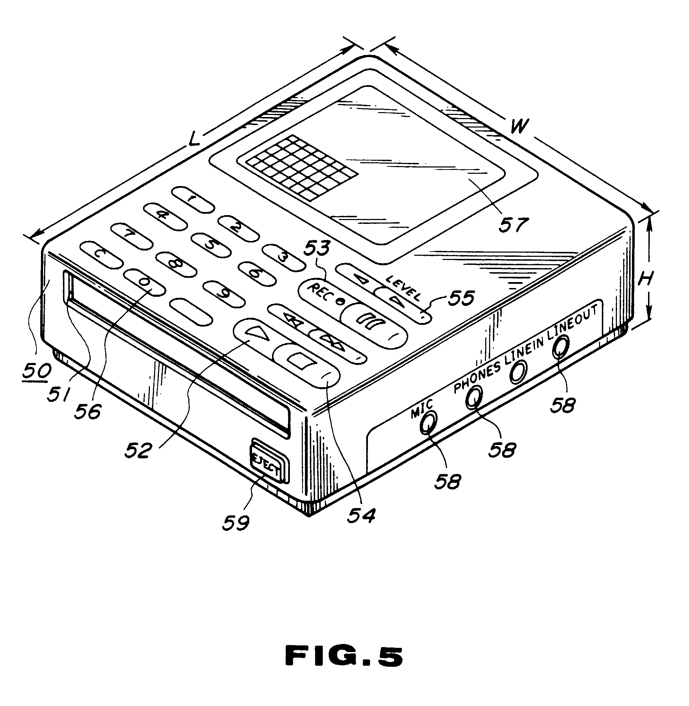

Figure 5 is a perspective view of an embodiment of recording and/or reproducing apparatus according to the present invention;
Figure 6 is an exploded perspective view showing a mechanical unit block provided within an outer casing;
Figure 7 is a perspective view showing the inside of the outer casing;
Figure 8 is a perspective view showing a control unit for a magnetic head;
Figure 9 is a side elevation showing the control unit and a part of the magnetic head unit;
Figure 10 is a magnetic view showing a disc cartridge loaded in position; and
Figures 11 and 12 are side elevations showing the relation between the control unit and the magnetic head unit.

Before describing the embodiment of a recording and/or reproducing apparatus for an optical disc, a disc cartridge will be explained.

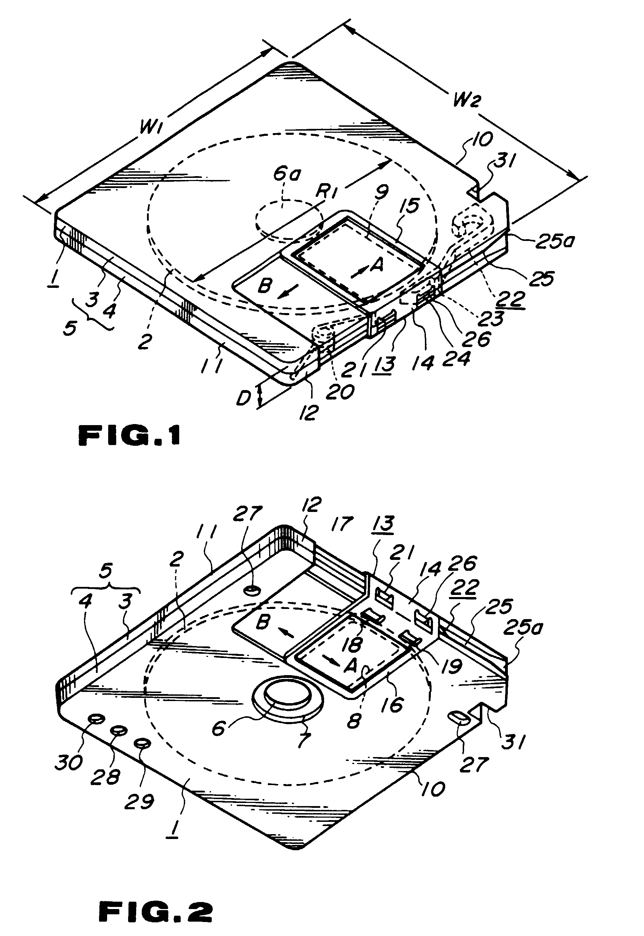

Referring to Figure 1, the disc cartridge 1 has accommodated therein an optical disc 2 on which, even although the disc diameter R1 is about 64mm, the same amount of information as recorded on a known optical disc with a disc diameter of approximately 120mm, such as a so-called compact disc, may be recorded by using high density recording. That is, the present optical disc 2, with a thickness of a disc base plate of 1.2mm and a track pitch of the recording track of 1.6µm, enables recording of an information amount corresponding to 60 to 74 minutes of music.

The optical disc 2 is a magneto-optical disc 2 with a photomagnetic recording film as a recording layer, to enable erasure and rerecording of previously recorded signals repeatedly.

Referring to Figures 1 and 2, the cartridge 1 includes a housing 5 composed of rectangular upper and lower halves 3 and 4 abutted and connected to each other, with the disc 2 rotatably accommodated therein.

Referring to Figure 2, the lower half 3 has a central opening 7 for exposing the rim of a centring hole 6 of the disc 2 into which a disc table of a disc driving unit for rotationally driving the disc 2 is introduced on loading the cartridge 1 into the recording and/or reproducing apparatus. The lower half 4 also has an aperture 8 for radially exposing a part of the signal recording surface of the disc 5 to face an optical pick-up unit. The upper half 3 has an aperture 9 into which a magnetic head is introduced. The apertures 8 and 9 are provided in register with each other by a front side 12 of the housing 5 centrally between sides 10 and 11 of the housing 5, and are each in the form of a rectangle large enough to expose the signal recording surface of the disc 2 between the inner and outer peripheries of the disc 2.

A shutter 13 for closing the apertures 8 and 9 is slidably mounted on the housing 5. The shutter 13 is produced by bending a thin metal plate or by a resin plate or by moulding synthetic resin so as to be of a U-shaped cross-section. Thus the shutter 13 comprises a pair of shutter sections 15 and 16 connected by a web 14. The shutter 13 is slidably mounted on the housing 5 with the sections 15 and 16 extending over the apertures 8 and 9. A pair of engaging lugs 18 and 19 which engage in a groove 17 formed in the lower half 4 are formed in the section 15 in a region close to the web 14. The shutter 13 is slidably mounted on the housing 5 with the lugs 18 and 19 engaging in the groove 17 so as to be controlled in its sliding movement and prevented from removal.

Within the housing 5, there is provided a torsion coil spring 20 as biasing means for continually biasing the shutter 13 in the direction to close the apertures 8 and 9. The spring 20 has one end retained by a corner on the front side 12, and its other end retained by a spring retention section 21 formed in the web 14, for biasing the shutter 13 in the direction A to close the apertures 8 and 9.

At the other corner on the front side 12 there is provided a shutter locking member 22 for locking the shutter 13 in the position closing the apertures 8 and 9. The locking member 22 is formed of synthetic resin and is flexible or elastically deflectable. The locking member 22 is mounted inside the housing 5 so that a locking section 24 having an engaging recess 23 on its lateral side protrudes into a shutter opening/closing member inserting groove 25 formed on the front side 12. When the shutter 13 reaches a position closing the apertures 8 and 9, as shown in Figures 1 and 2, the shutter locking member 22 locks the shutter 13 in the closure position, with a locking member 26 formed in the web 14 engaging the recess 23.

On the front side 12 there is formed the groove 25 engaged by a shutter opening/closing member provided on the recording/reproducing apparatus for unlocking the shutter 13 from the shutter locking member 22, and displacing the shutter 13 in a direction B against the force of the spring 20. The groove 25 is formed over the sliding range of the shutter 13 beginning from the side 10 lying orthogonally relative to the sliding direction of the shutter 13. The end 25a of the groove 25 opening on the side 10 provides means by which the shutter opening/closing member on the recording and/or reproducing apparatus is introduced.

The lower half 4 has a pair of positioning pin engaging holes 27, 27 into which positioning pins for setting the horizontal loading position of the cartridge 1 are engaged on loading it.

The lower half 4 also has disc types discriminating holes 28 and 29 for discriminating the type of optical disc accommodated in the cartridge 1, and a mistaken recording inhibiting member 30.

The cartridge 1 need only be large enough to accommodate the disc 2 having the diameter R1 of approximately 64mm. Thus the housing 5 has a width W1 along the sliding direction of the shutter 13 equal to 68mm, a width W2 along the direction normal to the sliding direction of the shutter 13 equal to 72mm, and a thickness D equal to 5mm. The width W2 of the housing 5 normal to the sliding direction of the shutter 13 is larger than the width W1 along the sliding direction of the shutter 12, to conserve a space for the spring 20 and the shutter locking member 22 on the front side 12.

Since the disc 2 capable of rewriting recorded signals is accommodated in the cartridge 1, it is necessary for the magnetic head to be introduced into the housing 5 by means of the aperture 9. Thus the housing 5 is provided with a notch 31 indicating that the disc 2 is an overwrite type magneto-optical disc 1, and enabling the magnetic head to be introduced into the housing 5. As shown in Figures 1 and 2, the notch 31 is provided on the side 10.

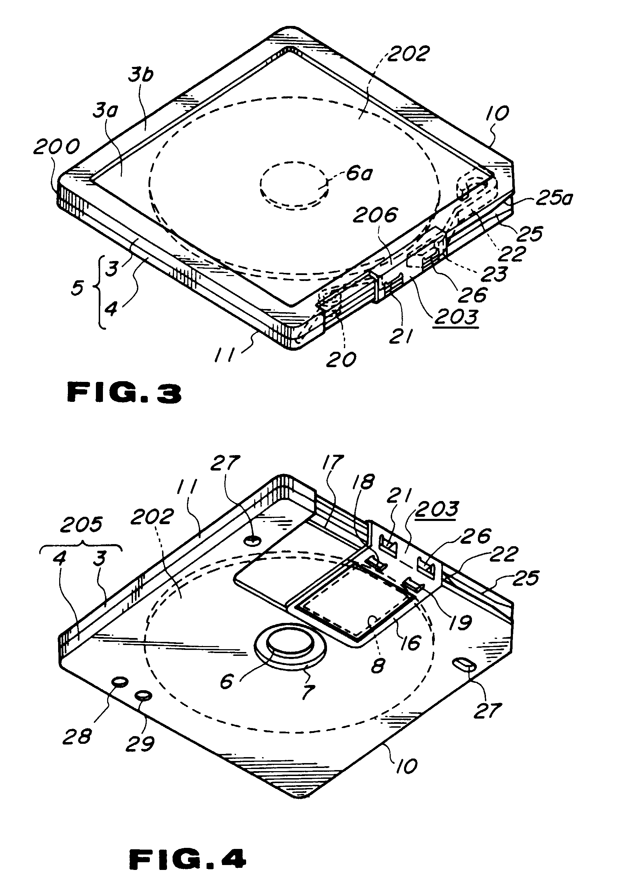

The embodiment of recording/and reproducing apparatus to be described also has an optical pick-up unit, so a reproduce-only optical disc 202 (Figures 3 and 4) may also be used as a recording medium.

While the disc 2 has a photomagnetic recording layer on a disc base plate having pregrooves as a recording guide, the reproduce-only optical disc 202 has a reflective film of A1 or Au of high reflective index on a disc base plate on which a pattern of projections and valleys are formed in a spiral or concentric pattern. Alternatively, the reproduce-only optical disc 202 may be the above-mentioned magneto-optical disc on which information signals have been recorded previously. Referring to Figures 3 and 4, since there is no necessity to provide a magnetic head for generating an external magnetic field, the upper half 3 of a disc cartridge 200 accommodating the reproduce-only optical disc 202 is not provided with an aperture but is solid throughout in a manner different from the cartridge 1 accommodating the magneto-optical disc 2. However, a central region 3a of the major surface 3a of the upper half 3 is recessed relative to the near-by region 3b, so as to be used as a region for applying a label or the like. The lower half 4 is provided with the aperture 8 to be exposed to the optical pick-up unit, as shown in Figure 4. Since it is unnecessary for a shutter 203 mounted on the cartridge 200 to close the upper half 3 of a housing 205, the shutter 203 is not provided with a section extending over the upper half 3, as shown in Figure 3. However, there is provided a supporting lug 206 for supporting a portion of the front side of the upper half 3 for assuring positive sliding of the shutter 203 relative to the housing 205 and preventing removal of the shutter 203.

For assuring discrimination from the cartridge 1, the cartridge 200 is not provided with the notch 31 provided in the cartridge 1.

Except for the above-mentioned differences, the cartridge 200 accommodating the optical disc 202 is similar to the cartridge 1 as to size, the mechanism for closing and locking the shutter 203, and as to the groove 25 to be engaged by the shutter opening/closure member.

A magnetic plate 6a is provided about the rim of the hole 6 of the disc 2 or 202 accommodated in the cartridge 1 or 200 for enabling the disc 1 or 200 to be loaded onto the disc table of the disc driving unit and held by a magnetic attracting means, such as a permanent magnet, provided in the disc driving unit.

The embodiment of a recording and/or reproducing apparatus for an optical disc, employing the above-described disc cartridge 1 or 200, will now be explained.

The apparatus is so constructed and arranged that the cartridge 1 or 200 is loaded therein, and information signals may be recorded on or reproduced from the magneto-optical disc 2, or information signals recorded on the optical disc 202 may be reproduced.

The apparatus is of such a size as to be portable and can be held in the user's hand or attached to the user's body. Thus an outer casing 50 of the main body of the apparatus has a length L of not more than 112mm, a width W of not more than 89mm and a height H of not more than 31mm. In the present preferred embodiment, the outer casing 50 has a length L of 112mm, a width W of 89mm and a height H of 31mm.

The front of the outer casing 50 has a cartridge inserting and take-out aperture 51 by means of which the cartridge 1 or 200 may be introduced into or taken out of the outer casing 50. The aperture 51 is large enough to permit the cartridge 1 or 200 to be introduced or taken out in the sliding direction of the shutter 13 or 203. The upper side of the outer casing 50 is provided with control buttons for controlling the recording/reproducing operation, such as a playback start button 52, a recording button 53, a stop button 54 or a playback output adjustment button 55, selection buttons 56 for selecting and designating information signals recorded on the magneto-optical disc 2 or on the optical disc 202, and a display section 57 for displaying operating modes of the apparatus, or display information for information signals being recorded and/or reproduced. A lateral side of the outer casing 50 normal to the side thereof provided with the aperture 51 is provided with jacks 58, such as a microphone connecting jack, earphone connecting jack or the like. The front side of the outer casing 50 is also provided with an eject button 59 for ejecting the cartridge 1 or 200.

A lid, not shown, may be provided to cover the aperture 51 to prevent dust and dirt entering the inside of the outer casing 50.

Within the outer casing 50, there are provided devices or units for recording and/or reproducing information signals on or from the magneto-optical disc 2 or the optical disc 202, such as a disc loading unit 63 for loading the cartridge 1 or 200 onto a cartridge loading section 60 and loading the disc 2 or 202 onto a disc table 62 of a disc driving unit 61, an optical pick-up unit 64 transportable across between the inner and outer peripheries of the disc 2 or 202 loaded on and rotated with the disc table 62 for recording information signals on the disc 2 or reproducing information signals recorded on the disc 2 or on the disc 202, or a magnetic head device 65 for generating an external magnetic field for recording information signals on the magneto-optical disc 2.

The cartridge loading section 60 is provided on a chassis base plate 66, on which the disc driving unit 61 or a transporting unit for the optical pick-up unit 64 are mounted. Thus the cartridge loading section 60 is so designed as to provide a space sufficient to load the cartridge 1 or 200 above the upper surface of the chassis base plate 66. Positioning pins 67 and 68 for engaging with the holes 27, 27 in the disc 1 or 200 are mounted upright on the cartridge loading section 60. On loading the cartridge 1 or 200 onto the cartridge loading section 60, the positioning pins 67 and 68 are engaged in the holes 27, 27 for loading the disc 1 or 200 in position with respect to the cartridge loading section 60.

At a mid portion of the chassis base plate 66, on which the cartridge loading section 60 is mounted, there is mounted the disc driving unit 61 for rotationally driving the magneto-optical disc 2 of the cartridge 1 or the optical disc 202 of the disc cartridge 202. The disc driving unit 61 is mounted with a driving motor 69 mounted on the lower side of the chassis base plate 66 and with a spindle shaft 70 protruding towards the cartridge loading section 60. The distal end of the spindle shaft 70 is secured to the disc table 62 for rotationally driving the disc 2 or 202. Since the disc table 62 is to rotate the disc 2 or 202 in unison therewith, it is provided with a discattracting magnet for securing the disc 2 or 202 thereto.

The optical pick-up unit 64 is supported on the chassis base plate 66 by means of a feed screw 72 and a feed guide shaft 73 mounted on the lower side of the chassis base plate 66 for facing an objective lens 71 for converging a laser beam on a signal recording surface of the disc 2 or 202. The optical pick-up unit 64, supported in this manner, is transported across between the inner and the outer peripheries of the disc 2 or 202 on actuating a pick-up feed motor 74 for rotationally driving the feed screw 72.

The pick-up feed motor 74 and the feed screw 72 are connected to each other by a speed-reducing gearing unit 75.

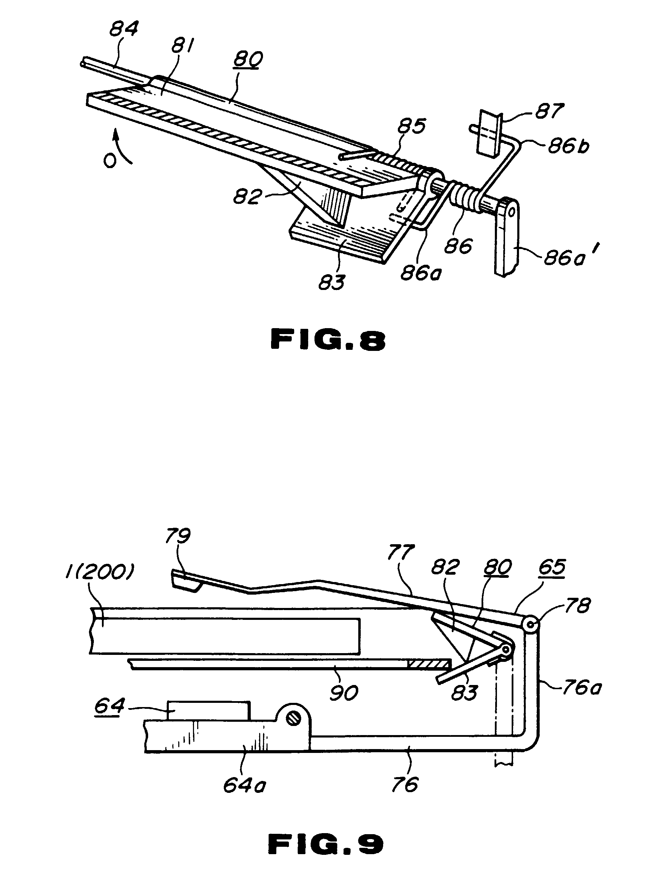

The magnetic head device 65 is connected to the optical pick-up unit 64 so as to be transported across between the inner and outer peripheries of the disc 2 or 202 in synchronism with the optical pickup unit 64. Turning to Figure 9, the magnetic head device 65 is connected to the optical pick-up unit 64 by having the proximal end of a magnetic head supporting arm 77 supported by the distal end of a supporting member 76a upstandingly formed on the distal end of a connecting arm 76 having one end connected to a housing 64a for an optical system of the optical pick-up unit 64. The magnetic head supporting arm 77 is rotatably supported by a pivot 78 with respect to the supporting member 76a, so that a magnetic head 79 mounted on the distal end of the arm 77 may be moved into contact with or away from the disc 2 on the disc table 62. Meanwhile, the magnetic head supporting arm 77 is rotationally biased by biasing means, not shown, in a direction in which the magnetic head 79 mounted on its end is slidingly contacted with the disc 2 on the disc table 62, with a contact pressure of about 2 to 3g. To this end, a member having a surface with a low frictional coefficient is formed as one with the disc 2 on the surface of the disc 2 facing the magnetic head 7a.

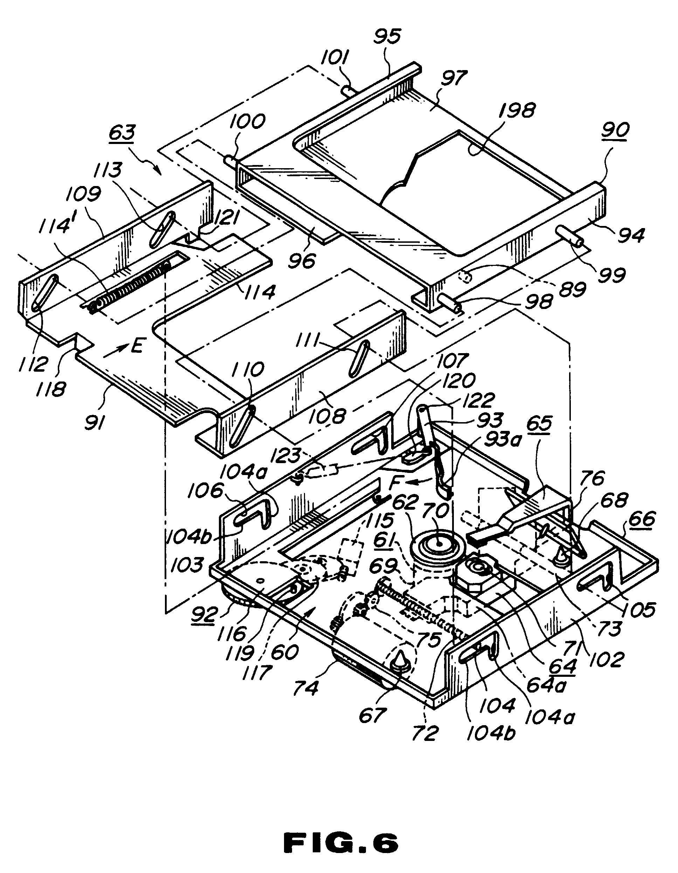

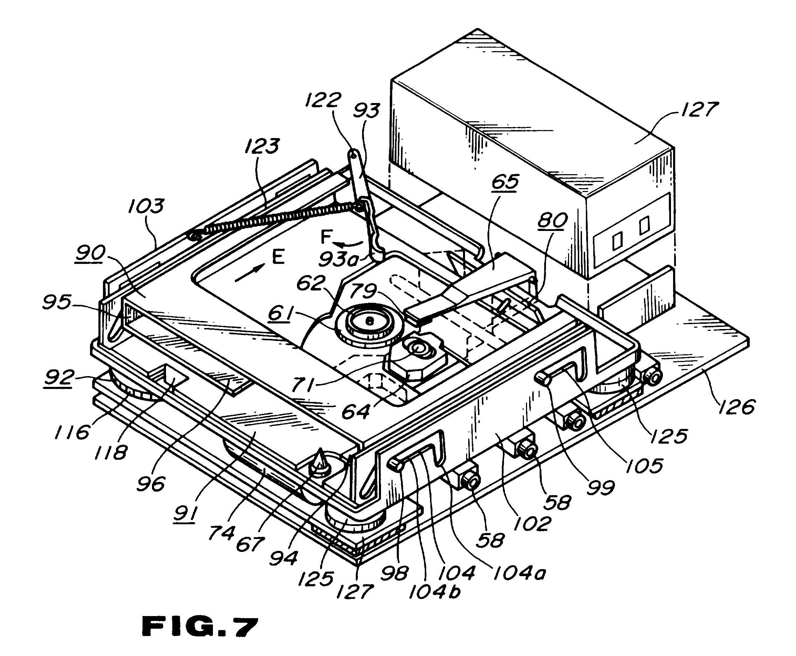

The magnetic head unit 64 is so constructed and designed that, when the cartridge 1 having accommodated therein the magneto-optical disc 2 is loaded onto the cartridge loading section 60, the magnetic head 79 is introduced into the housing 5 via the aperture 9 into sliding contact with the disc 2 and, when the cartridge 200 having accommodated therein the read or reproduce-only optical disc 2, and hence not provided with the aperture 9 to be exposed to the magnetic head is loaded, the magnetic head 79 is maintained at a position removed from the surface of the cartridge 200 to prevent a sliding contact of the magnetic head 79 with the cartridge 20 for preventing possible damage to the magnetic head 79. Thus the apparatus is provided with a magnetic head contact/non-contact controlling unit 80 for discriminating whether the loaded disc cartridge is the cartridge 1 or 200 and for controlling the coming into or out of contact of the magnetic head 79 with the magneto-optical disc 2 or the optical disc 202. Turning to Figures 6 and 7, the controlling unit 80 is provided inwardly of the cartridge loading section 60 and in opposition to the inserting direction of the cartridge 1 or 200. As shown in Figures 8 and 9, the controlling unit 80 is provided with a rotation controlling plate 81 for controlling the pivoting of the magnetic head supporting arm 77 of the magnetic head unit 64 for controlling the coming into or out of contact of the magnetic head 79 with the disc 2 or 202 on the disc table 62, and a cartridge discriminating member 82 for discriminating between the cartridge 1 and the cartridge 200 for controlling the pivoting of the controlling plate 81. The controlling plate 81 is rotatably supported on a pivot 84 carried by a supporting member 86a' mounted upright on the chassis base plate 66. The cartridge discriminating member 82 is mounted normal to the inner lateral surface of the controlling plate 81. The discriminating member 82 is mounted at a position in register with the magneto-optical disc indicating notch 31 formed in the cartridge 1 loaded into the loading section 60. A rotation-biasing plate 83 is rotatably mounted on the pivot shaft 84 with the discriminating member 82 in-between. The rotation-biasing plate 83 and the controlling plate 81 fitted with the cartridge discriminating member 82 are coupled by a rotation-biasing spring 85 placed about the pivot shaft 84. The controlling plate 81 and the rotation-biasing plate 83, thus coupled, are rotationally biased by a torsion coil spring 86 placed about the pivot shaft 84, in a direction 0 shown in Figure 8, for rotationally biasing the magnetic head supporting arm 77 placed on the controlling plate 81 in a direction away from the magneto-optical disc 2 or the optical disc 202 placed on the disc table 62. The spring 86, thus rotationally biasing the controlling plate 81 is mounted on the pivot shaft 84 by having one arm 86a retained by the spring-biased plate 83 and its other arm 86b retained by a retainer 87 provided on the chassis base plate 66 for rotationally biasing the rotation-biasing plate 83 and the controlling plate 81 in the direction 0 in Figures 8 and 9.

It is noted that the rotation-biasing plate 83 is thrust by a cartridge holder 90 as later described or by the cartridge 1 or 200 inserted into the cartridge holder 90, and thereby rotated against the biasing of the spring 86.

The disc loading unit 63, for loading the cartridge 1 or 200 inserted via the aperture 51 onto the cartridge loading section 60, is formed by the cartridge holder 90, for holding the cartridge 1 or 200 to be loaded into the apparatus, an ejection plate 91 for moving the cartridge holder 90 vertically with respect to the cartridge loading section 60 and for ejecting the cartridge 1 or 200 out of the outer casing 50, an ejection plate driving unit 92 for sliding the ejection plate 91, and a cartridge ejection lever 93 for outwardly ejecting the cartridge 1 or 200 inserted into and held by the cartridge holder 90 out of the outer casing 50.

The cartridge holder 90 is substantially in the form of a flat plate large enough to hold the cartridge 1 or 200 thereon, and cartridge holding sections 94 and 95 having U-shaped cross-sections formed on both sides of the flat plate for holding the cartridge 1 or 200. The side of the cartridge holder 90 facing the aperture 51 is open and functions as a cartridge receiving opening 96. A bottom plate 97 of the cartridge holder 90 has an aperture 198 to be exposed to the optical pick-up unit 64 and the disc table 62 provided on the chassis base plate 66. The outer lateral sides of the cartridge holding sections 94 and 95 are provided with upstanding guide pins 98, 99; 100, 101 for guiding vertical movement. The cartridge holder 90 is supported by having the guide pins introduced and engaged in guide slots 104, 105; 106, 107 provided in upright walls 102 and 103 on the opposite sides of the chassis base plate 66. Each of the guide slots 104, 105; 106, 107 is composed of a vertical run, such as a vertical run 104a, extending parallel to the shaft 70 of the disc driving unit 61, and a horizontal run, such as a horizontal run 104b, extending from the vertical run 194a towards the aperture 51 parallel to the inserting direction of the cartridge 1 or 200. The cartridge holder 90, supported by the chassis base plate 66 by having the guide pins 98, 99; 100, 101 introduced into the guide slots 104, 105; 106, 107, may be moved vertically in the axial direction of the shaft 70 of the disc driving unit 61 and in the inserting/take-out direction of the cartridge 1 or 200, by the guide pins 98, 99; 100, 101 being guided along the guide slots 104, 105; 106, 107.

On an inner lateral side of the cartridge holding section 94 of the cartridge holder 90, a shutter opening/closure pin 89 is provided so as to be introduced into and engaged with the groove 25 of the cartridge 1 or 200 inserted into the cartridge holder 90, for unlocking the shutter 13 for opening the shutter 13.

The ejecting plate 91 is a flat plate on opposite sides of which upright wall sections 108 and 109 are formed. The wall sections 108 and 109 are provided with inclined guide slots 110, 111; 112, 113 in which the guide pins 98, 99; 100, 101 are engaged. The guide slots 110, 111; 112, 113 are inclined upwards from the aperture 51 towards the rear. The ejecting plate 91 has a cut-out 114 to be exposed to the optical pick-up unit 64 and the disc table 62 provided on the chassis base plate 66. The ejecting plate 91 is slidably mounted on the chassis base plate 66 and biased inwards as shown by an arrow E in Figure 6 by a tension spring 114' installed between it and the chassis base plate 66. With the ejecting plate 91 biased in this manner, the cartridge holder 90, having the guide pins 98, 99; 100, 101 introduced and engaged in the inclined guide slots 110, 111; 112, 113, is moved in a direction approaching the disc table 62.

The ejecting plate 91, thus biased by the spring 114, is slid by the ejection plate driving unit 92, against the bias of the spring 114, for displacing the cartridge holder 90 to a raised position spaced apart from the disc table 62, and horizontally to an ejecting position. The ejection plate driving unit 92 is provided with an ejection motor 115 and an ejection plate actuating gear 116, interconnected by gearing 117. An actuating pin 119 for engaging with a retainer 118 found in the forward side of the ejecting plate 91 is mounted at an offset position of the gear 116. If, with the ejecting plate 91 pulled by the spring 114 and the cartridge 1 or 200 loaded on the cartridge loading section 60, the eject button 59 is actuated for driving the ejection motor 115 for rotationally driving the gear 116, the actuating pin 119 abuts on and thrusts the retainer 118 for sliding the ejecting plate 91 against the bias of the spring 114 for shifting the ejecting plate 91 to an ejecting position. With the ejecting plate 91 thus slid to the ejecting position, the cartridge holder 90 is displaced to a raised position removed from the disc table 62 while being displaced horizontally to an ejecting position, as shown in Figure 7.

The ejecting plate 91, thus slid to the ejecting position, is maintained there by being locked by a locking lever 120 actuated into rotation by the cartridge ejecting lever 93. The locking lever 120 is mounted on the rear side of the chassis base plate 66 under the rotational bias of a spring, not shown, so that, when the ejecting plate 91 is in the ejecting position, the locking lever 120 is engaged with a locking member 121 of the ejecting plate 91 for locking the ejecting plate 91 in the ejecting position.

The cartridge ejecting lever 93 is rotatably supported by a supporting shaft 122 mounted on the rear side of the chassis base plate 66 with a distal side cartridge thrusting section 93a facing the rear end face of the cartridge holder 90, as shown in Figure 7. The cartridge ejecting lever 93 is rotationally biased by a tension spring 123 installed between it and the upright wall 103 of the chassis base plate 66 in a direction arrow F in Figures 6 and 7, in which the cartridge thrusting section 93a is protruded inwardly of the cartridge holder 90.

The mechanical block unit, composed of the disc driving unit 61, the optical pick-up unit 64 and the cartridge loading unit 63 assembled together by the chassis base plate 66, is stationarily supported via a damper 125 on a bottom plate 126 of the outer casing 50.

At the rear side within the outer casing 50 accommodating the above mentioned mechanical unit block, a battery storage section 127, accommodating a battery for supplying a power source necessary for driving the apparatus, is provided and placed on the bottom plate 126.

A printed circuit board 127' constituting an electric circuit of the recording and/or reproducing apparatus is mounted on the bottom plate 126.

The operation of loading the disc 1 or 200 into the recording and/or reproducing apparatus will now be explained.

In the first place, the operation of loading the disc cartridge 1 having therein the magneto-optical disc 2 will be explained.

For loading the cartridge 1, the eject button 59 is actuated for displacing the ejecting plate 91 to an ejecting position, as shown in Figure 7, thereby displacing the cartridge holder 90 towards the aperture 51 to the raised position removed from the disc table 62 of the disc driving unit 61.

In this state, the cartridge 1 is introduced from the aperture 51 into the cartridge holder 90 within the outer casing 50, with the sliding direction of the shutter 13 as the inserting direction and with the side 10 as the inserting side. When the cartridge 1 is inserted into the cartridge holder 90, the shutter opening/closing pin 89 enters the groove 25 via the opening end 25a. When the cartridge 1 is further introduced into the cartridge holder 90, the shutter locking member 22 is flexed by the shutter opening/closing pin 89 for unlocking the shutter 13, with the side of the shutter 13 then abutting on the shutter opening/closing pin 89. When the cartridge 1 is further inserted into the cartridge holder 90, the shutter 13 is displaced for opening the apertures 8 and 9 by the shutter opening/closure pin 89 against the bias of the spring 20. The side 10 of the cartridge 1 then thrusts the cartridge thrusting section 93a of the cartridge ejecting lever 93 provided at the back of the shutter base plate 66 for rotating the lever 93 in a direction opposite to that shown by an arrow F in Figure 7 against the bias of the spring 123.

With the cartridge ejecting lever 93 thus rotated, the locking lever 120 of the ejecting plate 91 is rotated for unlocking the ejecting plate 91. The ejecting plate 91 is slid by the spring 114 in a direction E in Figure 7. At this time, the guide pins 98, 99; 100, 101 are moved along the inclined guide slots 110, 111; 112, 113, with the cartridge holder 90 being moved in the same direction. Concomitantly with the above movement, the guide pins 98, 99; 100, 101 are guided along the guide slots 104, 105; 106, 107, so that the cartridge holder 90 is lowered along the axis of the spindle shaft 70 of the disc driving unit 61 for loading the cartridge 1 in position on the cartridge loading section 60. Simultaneously, the magneto-optical disc 2 is loaded on the disc table 62.

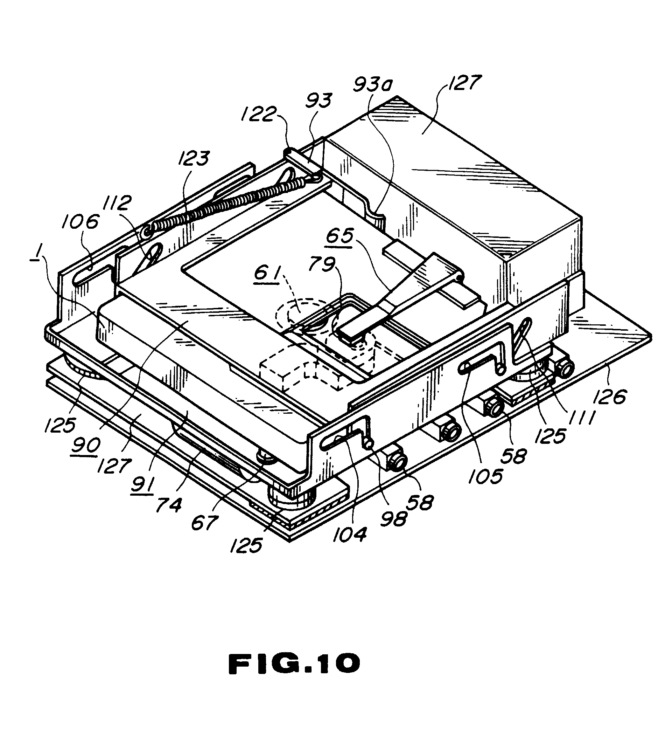

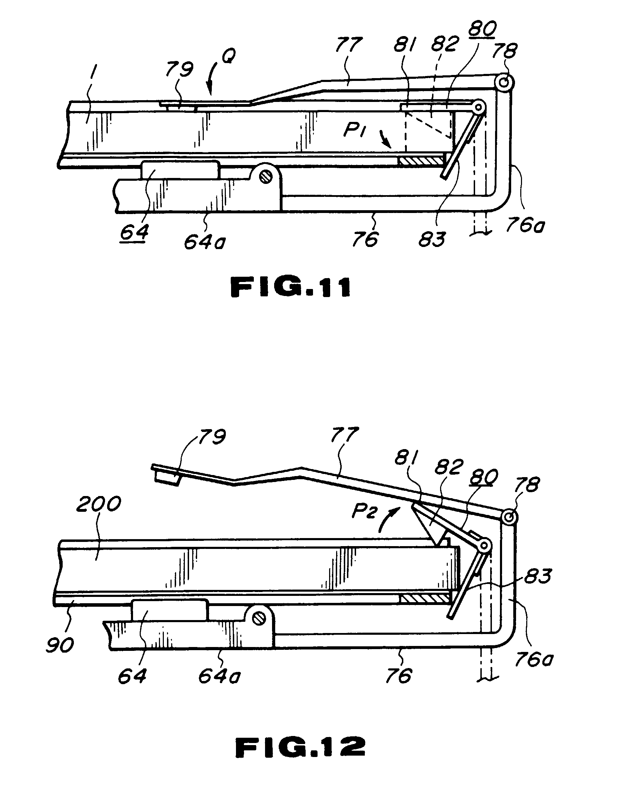

Meanwhile, when the cartridge 1 is introduced into the cartridge holder 90 as described above, the side 10 of the cartridge 1 is faced by the cartridge discriminating member 82 of the control unit 80. When the cartridge 1 is further introduced into the cartridge holder 90, the side 10 of the cartridge 1 abuts on the cartridge discriminating member 82, at the same time that the side 10 abuts on the rotation-biasing plate 83 for biasing the plate 83 in a direction P1 in Figure 11 against the bias of the spring 86. At this time, if the loaded cartridge 1 is that accommodating the magneto-optical disc 2, the cartridge discriminating member 82 descends into engagement with the magneto-optical disc indicating notch 31 formed in the cartridge 1. With the cartridge discriminating member 82 thus engaged with the notch 31, the control plate 81 is rotated in unison with the rotation-biasing plate 83 in a direction P1 in Figure 11 under the bias of the spring 85. As a result, the magnetic head supporting arm 77 of the magnetic head unit 64, so far supported by the control plate 81, is no longer supported, so that the supporting arm 77 is rotated towards the cartridge 1 in a direction Q in Figure 11. Thus the magnetic head 79 on the distal end of the arm 77 enters via the aperture 9 into the housing 5 and into contact with the magneto-optical disc 2, as shown in Figure 10. In this state, a recording power level light beam is irradiated by the optical pick-up unit 64 on the magneto-optical disc 2, at the same time that the external magnetic field modulated in accordance with information signals by the magnetic head unit 65 is applied to the magneto-optical disc 2, so that the information signals are recorded on the recording film of the magneto-optical disc 2 in accordance with the direction of the external magnetic field applied by the magnetic head unit 65.

Conversely, if the disc cartridge inserted into the cartridge holder 90 is the cartridge 200 accommodating the reproduce-only optical disc 202, since the magneto-optical disc indicating notch 31 is not provided in the disc cartridge 200, the cartridge discriminating member 82 is supported or thrust by the side 10 of the cartridge 200, so that the rotation controlling plate 81 is rotated in a direction P2 in Figure 12, for rotating the arm 77 in a direction away from the cartridge 200 to cause the magnetic head 79 to clear the housing 5.

Although the magnetic head contact non-contact controlling unit detects the indicating notch 31 provided in the disc cartridge, the disc discriminating holes 28, 29 may be used in place of the notch 31, in which case the discriminating holes 28 and 29 may be detected by electrically or mechanically operated detection means, and a magnetic head supporting arm normally biased in a direction away from the disc cartridge 1 or 200 may be driven by electro-magnetic driving means so as to be actuated in a direction of contact with the optical disc 202 only when the detection output indicates that the disc 2 or 202 accommodated in the disc cartridge 1 or 200 is the magneto-optical disc 202.

## Claims

1. An optical disc recording and/or reproducing apparatus employing a disc cartridge (1,200) having accommodated therein an optical disc (2,202) as a recording medium, the apparatus comprising:
an outer casing (50) comprising therein:
a cartridge loading section (60) for loading said disc cartridge (1,200);
a driving unit (62) for rotationally driving the optical disc (2,202) accommodated in said disc cartridge (1,200);
a disc loading unit (63) for loading said disc cartridge (1,200) onto said cartridge loading section (60) and loading said optical disc (2,202) accommodated in said disc cartridge (1,200) onto said disc driving unit (62);
a battery storage section (127);
a head unit (64, 65) transportable across between inner and outer peripheries of said optical disc (2,202) driven rotationally by said disc driving unit (62) for recording information signals on or reproducing information signals from said optical disc (2,202), the head unit comprising an optical head (64) provided on one side of the disc (2,202) accommodated in the disc cartridge (1,200) loaded on a main body of the apparatus; and
means (65) for generating an external magnetic field, said means (65) being mounted on the other side of the disc (2,202) for facing the optical head (64) with the disc in between and being arranged to be driven radially of the disc together with the optical head (64); and
means (82, 80) for setting the position of the external magnetic field generating means (65) with respect to the disc (2,202) in a state in which the disc cartridge (1,200) is completely loaded in position on the main body; said setting means comprising transporting means (77,80) for selectively transporting the external magnetic field generating means (65) between a position approaching the disc (2,202) in the disc cartridge (1,200) and a position displaced away from the disc, the transporting means comprising supporting means (77) for supporting the external magnetic field generating means (65) between the position approaching the magneto-optical disc (2,202) and the position displaced away from the disc (2,202), and connecting means (76) connected to the optical head (64) and to which the supporting means (77) is mounted;
characterized in that:
the optical disc is not more than 80mm in diameter;
the outer casing (50) has a length not more than 112mm, a width not more than 89mm, and a height not more than 31mm;
the supporting means (77) is mounted rotatably to said connecting means (76);
said head unit further comprises:
means (82) for discriminating the disc cartridge type so that said transporting means (77,80) selectively transports said external magnetic field generating means (65) on the basis of the result of discrimination of the disc cartridge type effected by said discriminating means (82); and
the discriminating means comprises an engaging section (82) arranged to be engaged in a discriminating section (31) provided in the disc cartridge (200) and operative to discriminate the disc cartridge type, the engaging section (82) being provided directly on a pivoted controlling plate (81) controlling pivoting of a magnetic head supporting arm (77) and coupled to a rotation biasing plate (83) by a spring (85), the rotation biasing plate (83) being directly engaged by the disc cartridge (200) and the engaging section (82) being arranged to engage with the disciminating section (31) for selective transport of the external magnetic field generating means (65) between the position approaching the disc and the position displaced away from the disc by the transporting means (77,80).

2. Apparatus according to claim 1 wherein said cartridge loading section (60) comprises position controlling means (90) for controlling the position of said disc cartridge (1,200) when said optical disc (2,202) in said disc cartridge (1,200) is loaded onto said disc driving unit (62) by said disc loading unit (63).

3. Apparatus according to claim 1 wherein said cartridge loading section (60) comprises a chassis base plate (66) on which said disc driving unit (62), said head unit (64, 65) said disc loading unit (63) and said position controlling means (90) are provided.

4. Apparatus according to claim 1 wherein said disc loading unit (63) comprises shutter opening means (89) for opening a shutter (13,203) provided in said disc cartridge (1,200).

5. Apparatus according to claim 4, wherein said shutter opening means (89) is provided on a side of said disc loading unit (63) facing said shutter (13,203) of said disc cartridge (1,200) inserted into a cartridge holder (90).

6. Apparatus according to claim 1, wherein said head unit (64, 65) comprises an optical pick-up unit (64) and a magnetic head unit (65) for producing an external magnetic field, said optical pick-up unit (64) and said magnetic head unit (65) facing each other on respective sides of said optical disc (2,202) accommodated in said disc cartridge (1,200) loaded into the apparatus.

7. Apparatus according to claim 6, further comprising controlling means (80) for controlling a vertical movement of said magnetic head unit (65) as a function of the type of disc (2,202) accommodated in said disc cartridge (1,200) loaded into the apparatus.

8. Apparatus according to claim 1, wherein the disc is a magneto-optical disc (202) and the discriminating section is a recess (31) for setting the height at a fully loaded position in the main body of the disc cartridge (200) of the external magnetic field generating means (79) for recording information signals on the magneto-optical disc (202) accommodated in the cartridge (200) in cooperation with the optical head (64).

## Patentansprüche

1. Optisches Plattenaufzeichnungs- und/oder Wiedergabegerät, bei dem eine Plattenkassette (1, 200) verwendet wird, welche eine optische Platte (2, 202) als Aufzeichnungsträger beherbergt, wobei das Gerät aufweist:
ein Außengehäuse (50), welches enthält:
einen Kassettenladeabschnitt (60), um die Plattenkassette (1, 200) zu laden;
eine Antriebseinheit (62), um die optische Platte (2, 202) drehbar anzutreiben, die in der Plattenkassette (1, 200) aufbewahrt ist;
eine Plattenladeeinheit (63), um die Plattenkassette (1, 200) in den Kassettenladeabschnitt (60) zu laden und um die optische Platte (2, 202), die in der Plattenkassette (1, 200) aufbewahrt ist, auf die Plattenantriebseinheit (62) zu laden;
einen Batterieaufbewahrungsabschnitt (127);
eine Kopfeinheit (64, 65), die quer zwischen dem inneren und äußeren Umfang der optischen Platte (2, 202) transportierbar ist, die drehbar durch die Plattenantriebseinheit (62) angetrieben wird, um Informationssignale auf der optischen Platte (2, 202) aufzuzeichnen oder um Informationssignale daraus zu reproduzieren, wobei die Kopfeinheit einen optischen Kopf (64) umfaßt, der auf einer Seite der Platte (2, 202) vorgesehen ist, die in der Plattenkassette (1, 200) aufbewahrt ist, die auf den Hauptkörper des Geräts geladen ist; und
eine Einrichtung (65) zum Erzeugen eines externen Magnetfeldes, wobei die Einrichtung (65) auf der anderen Seite der Platte (2, 202) so befestigt ist, daß sie dem optischen Kopf (64) mit der Platte dazwischen zugekehrt ist, und eingerichtet ist, radial zur Platte zusammen mit dem optischen Kopf (64) angetrieben zu werden; und eine Einrichtung (82, 80), um die Position der Extern-Magnetfelderzeugungseinrichtung (65) in bezug auf die Platte (2, 202) in einen Zustand einzustellen, bei dem die Plattenkassette (1, 200) völlig auf dem Hauptkörper lagerichtig geladen ist; wobei die Einstelleinrichtung eine Transporteinrichtung (77, 80) aufweist, um wahlweise die Extern-Magnetfelderzeugungseinrichtung (65) zwischen einer Position zu transportieren, die sich der Platte (2, 202) in der Plattenkassette (1, 200) nähert, und einer Position versetzt von der Platte, wobei die Transporteinrichtung eine Trägereinrichtung (77) umfaßt, um die Extern-Magnetfelderzeugungseinrichtung (65) zwischen der Position zu lagern, die sich der magneto-optischen Platte (2, 202) nähert, und der Position versetzt von der Platte (2, 202), und eine Verbindungseinrichtung (76), die mit dem optischen Kopf (64) verbunden ist und an der die Trägereinrichtung (77) befestigt ist;
**dadurch gekennzeichnet, daß**
die optische Platte einen Durchmesser von nicht größer als 80 mm hat;
das Außengehäuse (50) eine Länge von nicht mehr als 112 mm, eine Breite von nicht mehr als 89 mm und eine Höhe von nicht mehr als 31 mm hat;
die Trägereinrichtung (77) drehbar an der Verbindungseinrichtung (76) befestigt ist;
wobei die Kopfeinheit außerdem aufweist:
eine Einrichtung (82) zum Unterscheiden des Plattenkassettentypus, so daß die Transporteinrichtung (77, 80) selektiv die Extern-Magnetfelderzeugungseinrichtung (65) auf der Basis des Ergebnisses der Unterscheidung des Plattenkassettentypus, die durch die Unterscheidungseinrichtung (82) ausgeführt wird, transportiert; und
die Unterscheidungseinrichtung einen Eingriffsabschnitt (82) umfaßt, der eingerichtet ist, daß er in einen Unterscheidungsabschnitt (31) eingreift, der in der Plattenkassette (200) vorgesehen ist, und den Plattenkassettentypus unterscheiden kann, wobei der Eingriffsabschnitt (82) direkt auf einer drehbar angelenkten Steuerplatte (81) vorgesehen ist, die die Drehbewegung eines Magnetkopfträgerarms (77) steuert, und mit einer Drehvorspannplatte (83) durch eine Feder (85) gekoppelt ist, wobei die Drehvorspannplatte (83) unmittelbar an der Plattenkassette (200) angreift, und der Eingriffsabschnitt (82) eingerichtet ist, in den Unterscheidungsabschnitt (31) für einen wahlweisen Transport der Extern-Magnetfelderzeugungseinrichtung (65) zwischen der Position, die sich der Platte nähert, und der Position, die von der Platte versetzt ist, durch die Transporteinrichtung (77, 80) einzugreifen.

2. Gerät nach Anspruch 1, wobei der Kassettenladeabschnitt (60) eine Positionssteuereinrichtung (90) umfaßt, um die Position der Plattenkassette (1, 200) zu steuern, wenn die optische Platte (2, 202) in der Plattenkassette (1, 200) in die Plattenantriebseinheit (62) durch die Plattenladeeinheit (63) geladen wird.

3. Gerät nach Anspruch 1, wobei der Plattenladeabschnitt (60) eine Chassisbasisplatte (66) umfaßt, auf welcher die Plattenantriebseinheit (62), die Kopfeinheit (64, 65), die Plattenladeeinheit (63) und die Positionssteuereinheit (90) vorgesehen sind.

4. Gerät nach Anspruch 1, wobei die Plattenladeeinheit (63) eine Blendenöffnungseinrichtung (89) umfaßt, um eine Blende (13, 203) zu öffnen, die in der Plattenkassette (1, 200) vorgesehen ist.

5. Gerät nach Anspruch 4, wobei die Blendenöffnungseinrichtung (89) auf einer Seite der Plattenladeeinheit (63) vorgesehen ist, die der Blende (13, 203) der Plattenkassette (1, 200), die in den Kassettenhalter (90) eingeführt ist, zugekehrt ist.

6. Gerät nach Anspruch 1, wobei die Kopfeinheit (64, 65) eine optische Abtasteinheit (64) und eine Magnetkopfeinheit (65) umfaßt, um ein externes Magnetfeld zu erzeugen, wobei die optische Abtasteinheit (64) und die Magnetkopfeinheit (65) einander auf entsprechenden Seiten der optischen Platte (2, 202), die in der Plattenkassette (1, 200) aufbewahrt ist, die in das Gerät geladen ist, zugekehrt sind.

7. Gerät nach Anspruch 6, welches außerdem eine Steuereinrichtung (80) aufweist, um eine Vertikalverschiebung der Magnetkopfeinheit (65) in Abhängigkeit vom Typus der Platte (2, 202) zu steuern, die in der Plattenkassette (1, 200) aufbewahrt ist, die in das Gerät geladen ist.

8. Gerät nach Anspruch 1, wobei die Platte eine magneto-optische Platte (202) ist und der Unterscheidungsabschnitt eine Ausnehmung (31) ist, um die Höhe - bei einer völlig geladenen Position im Hauptkörper der Plattenkassette (200) - der Extern-Magnetfelderzeugungseinrichtung (79) einzustellen, um Informationssignale auf der magneto-optischen Platte (202), die in der Kassette (200) aufbewahrt ist, in Zusammenwirken mit dem optischen Kopf (64) aufzuzeichnen.

## Revendications

1. Appareil d'enregistrement et/ou de reproduction de disque optique employant une pochette de disque (1,200) dans laquelle est logé comme support d'enregistrement un disque optique (2,202), appareil comportant:
un boîtier extérieur (50) dans lequel sont compris:
une section (60) de chargement de la pochette pour charger ladite pochette de disque (1,200);
un organe d'entraînement (62) pour entraîner en rotation le disque optique (2,202) logé dans ladite pochette de disque (1,200);
un organe (63) de chargement du disque pour charger ladite pochette de disque (1,200) sur ladite section (60) de chargement de la pochette et pour charger ledit disque optique (2,202), logé dans ladite pochette de disque (1,200), sur ledit organe (62) d'entraînement du disque;
une section (127) de rangement de la batterie;
un organe formant tête (64, 65) qui peut être transporté de part et d'autre, entre la périphérie intérieure et la périphérie extérieure du dudit disque optique (2,202) entraîné en rotation par ledit organe (62) d'entraînement du disque pour enregistrer des signaux d'information sur ledit disque optique (2,202) pour reproduire des signaux d'information qui sont sur ce disque, l'organe formant tête comportant une tête optique (64) prévue d'un côté du disque (2,202) logé dans ladite pochette de disque (1,200) chargée sur une pièce principale de l'appareil; et
des moyens (65) pour générer un champ magnétique extérieur, lesdits moyens (65) étant montés de l'autre côté du disque (2,202) pour faire face à la tête optique (64), le disque se trouvant entre eux, et étant disposés pour être entraînés dans le sens radial du disque avec la tête optique (64); et
des moyens (82, 80) pour définir la position des moyens (65) de génération du champ magnétique extérieur par rapport au disque (2,202) dans un état dans lequel la pochette de disque (1,200) est complètement chargée en position sur la pièce principale; lesdits moyens de définition comportant des moyens de transport (77, 80) pour transporter sélectivement les moyens (65) de génération du champ magnétique extérieur entre une position approchant le disque (2,202) logé dans la pochette de disque (1,200) et une position écartée du disque, les moyens de transport comprenant des moyens supports (77) pour supporter les moyens (65) de génération du champ magnétique extérieur entre la position approchant le disque magnéto-optique (2,202) et la position écartée du disque (2,202), et des moyens de connexion (76) connectés à la tête optique (64) et sur lesquels sont montés les moyens supports (77);
caractérisé par le fait que:
le disque optique a un diamètre non supérieur à 80mm;
le boîtier extérieur (50) a une longueur non supérieure 112mm, une largeur non supérieure (80mm) et une hauteur non supérieure à 31mm;
les moyens supports (77) sont montés, avec liberté de rotation sur lesdits moyens de connexion (76);
ledit organe formant tête comporte en outre:
des moyens (82) pour discriminer le type de pochette de disque de façon que lesdits moyens de transport (77,80) transportent sélectivement lesdits moyens (65) de génération du champ magnétique extérieur sur la base du résultat de la discrimination du type de pochette de disque effectuée par lesdits moyens de discrimination (82); et
les moyens de discrimination comprennent une section (82) de venue en prise disposée pour venir en prise dans une section de discrimination (31) prévue sur la pochette de disque (200) et fonctionnant pour discriminer le type de pochette de disque, la section (82) de venue en prise étant directement prévue sur une plaque de commande (81) qui pivote et commande le pivotement d'un bras (77) support de la tête magnétique et étant couplée à une plaque (83), contrainte en rotation, par un ressort (85), la plaque (83) contrainte en rotation venant directement en prise avec la pochette de disque (200) et la section de venue en prise (82) étant disposée pour venir en prise avec la section de discrimination (31) pour le transport sélectif, par les moyens de transport (77,80), des moyens (65) de génération du champ magnétique extérieur entre la position approchant le disque et la position écartée du disque.

2. Appareil selon la revendication 1, dans lequel ladite section (60) de chargement de la pochette comporte des moyens (90) de commande de position pour commander la position de ladite pochette de disque (1,200) lorsque ledit disque optique (2,202), qui se trouve dans la dite pochette de disque (1,200), est chargé sur ledit organe (62) d'entraînement du disque par ledit organe (63) de chargement du disque.

3. Appareil selon la revendication 1, dans lequel ladite section (60) de chargement de la pochette comporte une plaque de base formant châssis (66) sur laquelle sont prévus ledit organe (62) d'entraînement du disque, ledit organe formant tête (64, 65), ledit organe (63) de chargement du disque et lesdits moyens (90) de commande de la position.

4. Appareil selon la revendication 1, dans lequel ledit organe (63) de chargement du disque comporte des moyens (89) d'ouverture d'un volet pour ouvrir un volet (13,203) prévu sur ladite pochette de disque (1,200).

5. Appareil selon la revendication 4, dans lequel lesdits moyens (89) d'ouverture du volet sont prévus sur une face dudit organe (63) de chargement du disque qui fait face audit volet (13,203) de ladite pochette de disque (1,200) insérée dans un porte-pochette (90).

6. Appareil selon la revendication 1, dans lequel ledit organe formant tête (64, 65) comporte un organe de saisie optique (64) et un organe (65) formant tête magnétique pour produire un champ magnétique extérieur, ledit organe de saisie optique (64) et ledit organe (65) formant tête magnétique se faisant face l'un l'autre sur des faces respectives dudit disque optique (2,202) logé dans ladite pochette de disque (1,200) chargée dans l'appareil.

7. Appareil selon la revendication 6, comportant en outre des moyens de commande (80) pour commander un mouvement vertical dudit organe (65) formant tête magnétique en fonction du type de disque (2,202) logé dans ladite pochette de disque (1,200) chargée dans l'appareil.

8. Appareil selon la revendication 1, dans lequel le disque est un disque magnéto-optique (202) et la section de discrimination est un évidement (31) pour définir, la pochette de disque (200) étant en position entièrement chargée sur la pièce principale, la hauteur des moyens (79) de génération du champ magnétique extérieur prévus pour, en coopération avec la tête optique (64), enregistrer des signaux d'information sur le disque magnéto-optique (202) logé dans la pochette (200).
